# EUROPÄISCHE PATENTSCHRIFT

(11) **EP 2 998 170 B1**
(45) Veröffentlichungstag und Bekanntmachung des Hinweises auf die Patenterteilung: **14.11.2018**
(21) Anmeldenummer: 14185343.2
(22) Anmeldetag: 18.09.2014
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 23.03.2016
(73) Patentinhaber: Metalsa Automotive GmbH, 51702 Bergneustadt (DE)
(72) Erfinder: NAß, Michael, 51702 Bergneustadt (DE)
(74) Vertreter: Rebbereh, Cornelia

(56) Entgegenhaltungen:
- EP-A1- 2 239 166
- EP-A1- 2 329 996
- DE-A1- 19 712 955

## Beschreibung

Die Erfindung betrifft ein Überrollschutzsystem für Kraftfahrzeuge, mit den Merkmalen des Oberbegriffs des Anspruchs 1.

Überrollschutzsysteme der eingangs genannten Art sind in vielfältigen Ausgestaltungen aus dem Stand der Technik bekannt. Sie dienen bei Kraftfahrzeugen wie Cabriolets oder zweisitzigen Roadstern, bei denen das Dach zwischen einer den Innenraum überdeckenden und einer den Innenraum freigebenden Position verstellbar ist, dazu, die Insassen im Falle eines Überschlags des Kraftfahrzeugs zu schützen, wobei der in der Überschlagsposition aufgestellte Überrollkörper den Insassen einen Überlebensraum bereitstellt, wenn das Fahrzeug beim Überschlag auf den Überrollkörper abrollt.

Neben starr am Fahrzeug angeordneten Überrollbügeln, welche sich sowohl über die gesamte Fahrzeugbreite erstrecken, aber auch nur jeweils hinter einem Fahrzeugsitz angeordnet sein können, werden vermehrt sogenannte aktive Überrollschutzsysteme eingesetzt. Bei diesen Systemen befindet sich der Überrollkörper im Normalzustand in einer abgesenkten, von außen vorzugsweise nicht sichtbaren Lagerungsposition. Nur im Fall eines drohenden Überschlags erfolgt eine Aktivierung des Überrollschutzsystems, bei der der Überrollkörper durch eine Antriebseinheit angetrieben aus der Lagerungsposition in die Überschlagsposition verstellt wird.

Überrollkörper, bspw. Überrollbügel, Klappbügel oder Profilkörper, die im Normalzustand hinter den Fahrzeugsitzen von außen im Wesentlichen unsichtbar angeordnet sind und sich nur im Falle eines Überschlags selbsttätig aufstellen, stellen eine bevorzugte Ausführungsform der aktiven Überrollschutzsysteme dar. Zwingende Voraussetzung für die Einsetzbarkeit aller aktiven Systeme ist dabei, dass die Überrollkörper im Bedarfsfall in Sekundenbruchteilen in die die Insassen schützende Überschlagsposition verlagert werden. Darüber hinaus bestehen herstellerseitig definierte Anforderungen an die Biegesteifigkeit des Überrollkörpers in Abhängigkeit von der Belastungsrichtung im Falle eines Überschlags.

Bei Belastungen, die in Fahrzeuglängsachsenrichtung auf den Überrollkörper wirken, ist gefordert, dass der Überrollkörper bis zu einem Winkel von annähernd 90° verformbar sein muss, ohne dabei zu reißen. Gegenüber in Fahrzeugquerachsenrichtung wirkenden Belastungen hingegen hat der Überrollkörper eine hohe Widerstandsfähigkeit gegen Verformung aufzuweisen. Die Verformung des Überrollkörpers findet dabei im Bereich einer Biegekante statt. Die Biegekante ist dabei dort am Überrollkörper ausgebildet, wo die Führungseinheit in Ausfahrrichtung endet. Bekannte Überrollschutzsysteme weisen das Problem auf, dass diese zur Erreichung der geforderten Festigkeitseigenschaften eine komplexe Gestalt aufweisen, was zu hohen Herstellungskosten führt.

Dokument DE 197 12 955 wird als nächstliegender Stand der Technik angesehen und offenbart ein Überrollschutzsystem mit den Merkmalen des Oberbegriffs des Anspruchs 1.

Der Erfindung liegt die Aufgabe zugrunde, ein Überrollschutzsystem für Kraftfahrzeuge bereit zu stellen, das sich kostengünstig herstellen lässt und dessen Überrollkörper bei Belastungen in Fahrzeuglängsachsenrichtung eine gute Verformbarkeit aufweist, gleichzeitig jedoch eine hohe Widerstandsfähigkeit gegen Verformung in Fahrzeugquerachsenrichtung besitzt.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben. Wesentlich für das erfindungsgemäße Überrollschutzsystem ist, dass an dem Überrollkörper ein Verstärkungselement angeordnet ist. Das separate Verstärkungselement erstreckt sich dabei in der Überschlagsposition des Überrollkörpers in Ausfahrrichtung des Überrollkörpers betrachtet aus einem Bereich innerhalb der Führungseinheit über eine Biegekante hinaus in einen Bereich außerhalb der Führungseinheit. Das mit dem Überrollkörper verbundene Verstärkungselement erhöht in der Überschlagsposition des Überrollkörpers die Biegesteifigkeit des Überrollkörpers im Bereich der Biegekante. Das Verstärkungselement bietet dabei eine partielle Verstärkung der im Überschlagsfall besonders belasteten Bereiche des Überrollkörpers, welcher dadurch einfach und damit kostengünstig hergestellt werden kann. Gleichzeitig kann das Gesamtgewicht des Überrollkörpers aufgrund der begrenzten Erstreckung des Verstärkungselements gering gehalten werden. Eine Verformung des Überrollkörpers im Bereich der Biegekante wird neben der Ausgestaltung des Überrollkörpers maßgeblich über die Art des Verstärkungselements bestimmt, wobei dieses ortsfest an geeigneter Stelle mit dem Überrollkörper verbunden ist.

Die Verwendung eines Verstärkungselements zur Festlegung der Festigkeitseigenschaften des Überrollkörpers erlaubt es, über die Ausgestaltung des Verstärkungselements die Festigkeitseigenschaften des Überrollkörpers in einfacher Weise an die spezifischen Anforderungen anzupassen. Das Verstärkungselement erlaubt somit die Verwendung eines universellen Überrollkörpers, welcher durch unterschiedliche Verstärkungselemente an die konstruktiven Vorgaben angepasst werden kann, wobei das Verstärkungselement in einfacher Weise mit dem Überrollkörper verbunden wird.

Nach einer vorteilhaften Ausgestaltung der Erfindung ist dabei das Verstärkungselement derart ausgebildet, dass die Biegesteifigkeit des Überrollkörpers in Fahrzeugachsenquerrichtung erhöht und in Fahrzeuglängsachsenrichtung - jeweils bezogen auf die Einbaulage des Überrollschutzsystems im Kraftfahrzeug - im Bereich der Biegekante im Wesentlichen beibehalten wird. Eine entsprechende Ausgestaltung des Verstärkungselements gewährleistet im Überschlagsfall eine hohe Festigkeit des Überrollkörpers gegenüber Verformungen, welche aus auf den Überrollkörper wirkenden Kräften resultieren, die quer zur Fahrzeuglängsachsenrichtung gerichtet sind. Gegenüber derartigen Kräften ist eine hohe Biegesteifigkeit erforderlich, damit das Überrollschutzsystem die geforderte Schutzfunktion erfüllen kann. Gleichzeitig ermöglicht die Ausgestaltung des Verstärkungselements, dass in Längsachsenrichtung auf den Überrollkörper wirkende Kräfte eine Verformbarkeit des Überrollkörpers nicht behindern, so dass eine Verformung des Überrollkörpers von annähernd 90° beibehalten werden kann, ohne dass der Überrollkörper reißt.

Die entsprechende Ausgestaltung des Überrollkörpers mit einem gemäß dieser Weiterbildung ausgebildeten Verstärkungselement zeichnet sich durch seine geringen Herstellungskosten sowie geringes Eigengewicht des Überrollkörpers aus. Die Ausgestaltung des Verstärkungselements derart, dass dieses gemäß der vorteilhaften Weiterbildung der Erfindung in Fahrzeugquerachsenrichtung die Biegesteifigkeit des Überrollkörpers erhöht, wobei
gleichzeitig die Biegesteifigkeit des Überrollkörpers in Fahrzeuglängsachsenrichtung im Bereich der Biegekante im Wesentlichen beibehalten wird, kann grundsätzlich in beliebiger Weise erfolgen.

Nach der Erfindung ist jedoch vorgesehen, dass das Verstärkungselement als Strebe ausgebildet ist, deren Erstreckung in der Überschlagsposition des Überrollkörpers in Fahrzeugquerachsenrichtung im Bereich der Biegekante mehr als das zweifache, bevorzugt mehr als das vierfache, besonders bevorzugt mehr als das achtfache deren Erstreckung in Fahrzeuglängsachsenrichtung beträgt. Nach der Erfindung ist das Verstärkungselement als flache Strebe ausgebildet. Die Anordnung der Strebe erfolgt dabei derart, dass sich diese in Längsachsenrichtung zwischen den Befestigungspunkten am Überrollkörper erstreckt, wobei die Befestigungspunkte - bezogen auf die Lage des Überrollkörpers in der Überschlagsposition - innerhalb der Führungseinheit und außerhalb der Führungseinheit an dem Überrollkörper angeordnet sind. Die Strebe erstreckt sich somit bei einem in der Überschlagsposition angeordneten Überrollkörper in der erfindungsgemäßen Weise aus einem Bereich innerhalb der Führungseinheit über die Biegekante hinaus in einen Bereich außerhalb der Führungseinheit. In Breitenrichtung erstreckt sich die flache Strebe in Fahrzeugquerachsenrichtung, wohingegen sich die Strebe in Dickenrichtung in Fahrzeuglängsachsenrichtung erstreckt.

Die Verwendung eines entsprechend ausgebildeten Verstärkungselements ermöglicht durch die Dimensionierung der Strebe und dem Verhältnis der Ausdehnung in Fahrzeuglängsachsenrichtung zur Ausdehnung in Fahrzeugquerachsenrichtung eine einfache und komfortable Festlegung der Biegesteifigkeit des Überrollkörpers in Fahrzeuglängs- und Fahrzeugquerachsenrichtung. Die geringe Dicke des als Strebe ausgebildeten Verstärkungselements gewährleistet dabei, dass die Biegesteifigkeit des Überrollkörpers in Fahrzeuglängsachsenrichtung weitestgehend allein durch den Überrollkörper bestimmt wird, wohingegen die Biegesteifigkeit in Fahrzeugquerachsenrichtung maßgeblich durch die Strebe mitbestimmt wird. Eine flache Strebe lässt sich dabei besonders einfach und kostengünstig herstellen sowie platzsparend am Überrollkörper anordnen.

Nach der Erfindung ist dabei vorgesehen, dass die Strebe im Inneren eines als Hohlprofil ausgebildeten Überrollkörpers angeordnet ist.

Die Anordnung der Strebe im Inneren des Hohlprofils stellt eine platzsparende Anordnung dar, die darüber hinaus Anpassungsarbeiten an den weiteren Bauteilen des Überrollschutzsystems, bspw. der Führungseinheit, überflüssig macht. Besonders vorteilhafter Weise kann dabei die Strebe formschlüssig mit dem Überrollkörper verbunden, insbesondere mit dem Überrollkörper vernietet sein, worin eine besonders einfache, kostengünstige und zuverlässige Befestigungsmöglichkeit des Verstärkungselement an dem Überrollkörper zu sehen ist.

Nach einer weiteren vorteilhaften Ausgestaltung der Erfindung kann ferner vorgesehen sein, dass die Strebe einen, bevorzugt zwei sich in Fahrzeuglängsachsenrichtung erstreckende, an dem Überrollkörper anliegende Stützkörper aufweist, die in der Überschlagsposition des Überrollkörpers im Abstand von der Biegekante angeordnet sind. Die Verwendung von Stützkörpern ermöglicht eine flächige Abstützung des Verstärkungselements an dem Überrollkörper. Im Falle der Anordnung im Inneren des als Hohlprofil ausgebildeten Überrollkörpers erfolgt die Abstützung an den Innenflächen des Hohlprofils. Eine entsprechende Ausgestaltung gewährleistet somit in besonderer Weise die Funktionsweise des Verstärkungselements, wobei gleichzeitig aufgrund der Anordnung der Stützkörper im Abstand von der Biegekante keine Veränderung der Biegesteifigkeit gegenüber in Fahrzeuglängsachsenrichtung wirkenden Kräften bewirkt wird.

Die Ausgestaltung der Abstützung kann dabei in beliebiger Weise erfolgen. Nach einer besonders vorteilhaften Ausgestaltung der Erfindung ist dabei vorgesehen, dass die Stützkörper durch Verprägung einer metallischen Strebe gebildet sind. Die Verprägungen lassen sich besonders einfach und kostengünstig herstellen. Gleichzeitig gewährleisten die durch Verprägung hergestellten Stützkörper die Beibehaltung eines geringen Gewichts.

Ausführungsbeispiele der Erfindung werden nachstehend mit Bezug auf die Zeichnungen näher erläutert. In den Zeichnungen zeigen:
- Fig.1: eine perspektivische Ansicht einer ersten Ausführungsform eines Überrollschutzsystems;
- Fig.2: eine Vorderansicht des Überrollschutzsystems von Fig. 1, teilweise im Schnitt;
- Fig. 3: eine Schnittansicht des Überrollschutzsystems von Fig. 1;
- Fig. 4: eine Vorderansicht einer zweiten Ausführungsform eines Überrollschutzsystems, teilweise im Schnitt;
- Fig. 5: eine Schnittansicht des Überrollschutzsystems von Fig. 4;
- Fig. 6: eine Vorderansicht eines Verstärkungselements des Überrollschutzsystems von Fig. 4;
- Fig. 7: eine Vorderansicht einer dritten Ausführungsform eines Überrollschutzsystems, teilweise im Schnitt;
- Fig. 8: eine Schnittansicht des Überrollschutzsystems von Fig. 7 und
- Fig. 9: eine Schnittansicht einer weiteren Ausführungsform eines Verstärkungselements.

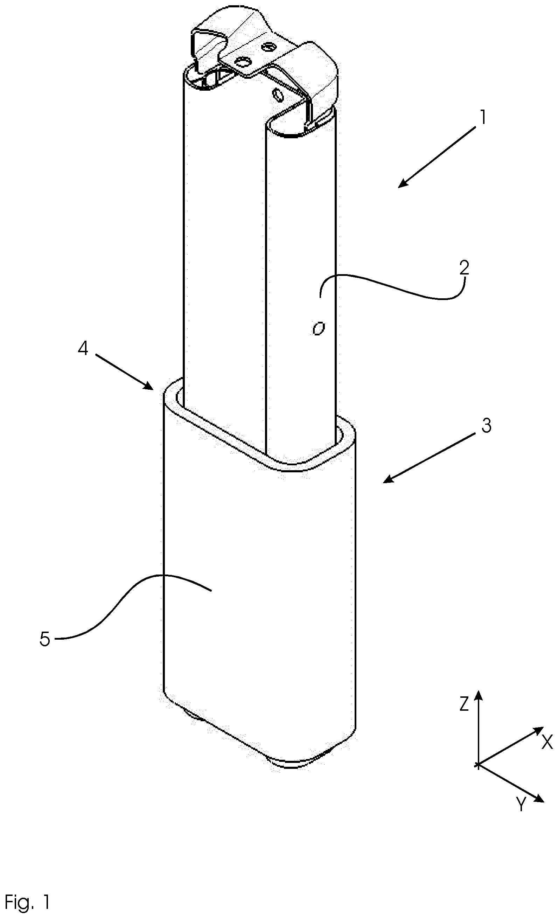

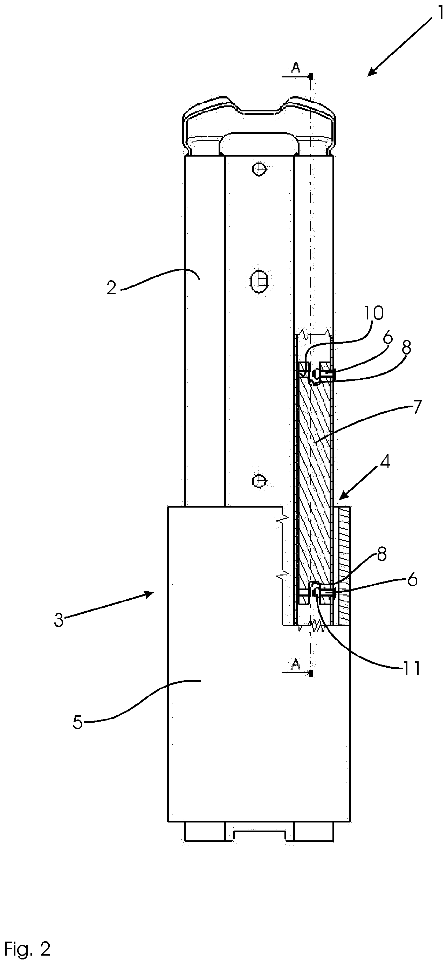

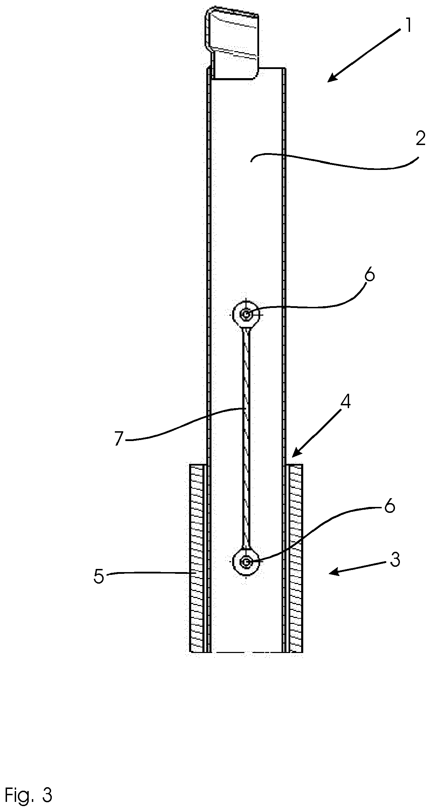

In den Figuren 1 bis 3 ist ein erstes Ausführungsbeispiel eines erfindungsgemäßen Überrollschutzsystems 1 dargestellt. Das Überrollschutzsystem 1 weist eine durch ein Außenprofil 5 gebildete Führungseinheit 3 auf, über die das Überrollschutzsystem 1 an einem hier nicht dargestellten Fahrzeug befestigt wird. Die Ausrichtung des Überrollschutzsystems 1 erfolgt dabei derart, dass sich das Überrollschutzsystem 1 in Fahrzeugquerachsenrichtung in Y-Richtung - bezogen auf das in der Zeichnung dargestellte Koordinatensystem - erstreckt. Die Ausfahrbewegung eines verstellbar an der Führungseinheit 3 gelagerten Überrollkörpers 2 erfolgt in Fahrzeughochachsenrichtung, welche der in den Zeichnungen dargestellten Z-Achse entspricht. In der Einbaulage ist damit das Überrollschutzsystem 1 quer zur Fahrzeuglängsachsenrichtung angeordnet, die der X-Achse in dem in Figur 1 dargestellten Koordinatensystem entspricht.

Die Ausfahrbewegung des Überrollkörpers 2, bei der dieser innerhalb des Außenprofils 5 in die in den Zeichnungen dargestellten Überschlagsposition bewegt wird, erfolgt mittels einer hier nicht dargestellten Antriebseinheit. In der Überschlagsposition bildet die Oberseite des Außenprofils 5 eine Biegekante 4 für den Überrollkörper 2. Verformungen des Überrollkörpers 2 in X- und Y-Achsenrichtung erfolgen aufgrund der bei einem Überschlag auftretenden Belastungen im Wesentlichen im Bereich der Biegekante 4.

Zur Erhöhung der Biegesteifigkeit des Überrollkörpers 2 gegenüber in Fahrzeugquerachsenrichtung - in Y-Achsenrichtung - wirkenden Kräften ist an dem Überrollkörper 2 ein als Strebe 7 ausgebildetes Verstärkungselement angeordnet. Das Verstärkungselement erstreckt sich in der Überschlagsposition des Überrollkörpers 2 zwischen zwei Befestigungspunkten aus einem Bereich innerhalb der Führungseinheit 3 in einen Bereich außerhalb der Führungseinheit 3 über die Biegekante 4 hinaus. Die Befestigung der Strebe 7 erfolgt dabei über Niete 6, die sich durch entsprechende Öffnungen 10 an den Strebenenden erstrecken. Zur ortsfesten Festlegung der Niete 6 dient ein Nietschließkopf 11, welcher innerhalb eines Schlitzes 8 der Strebe 7 angeordnet ist.

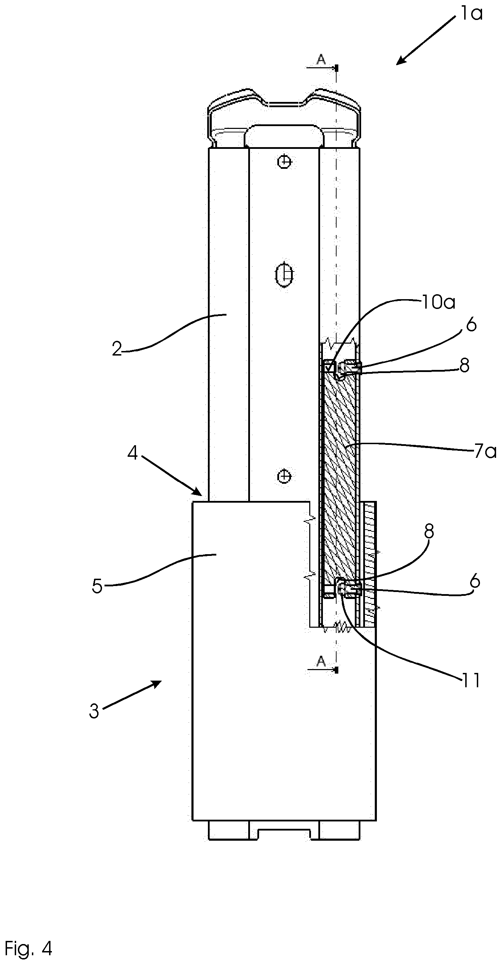

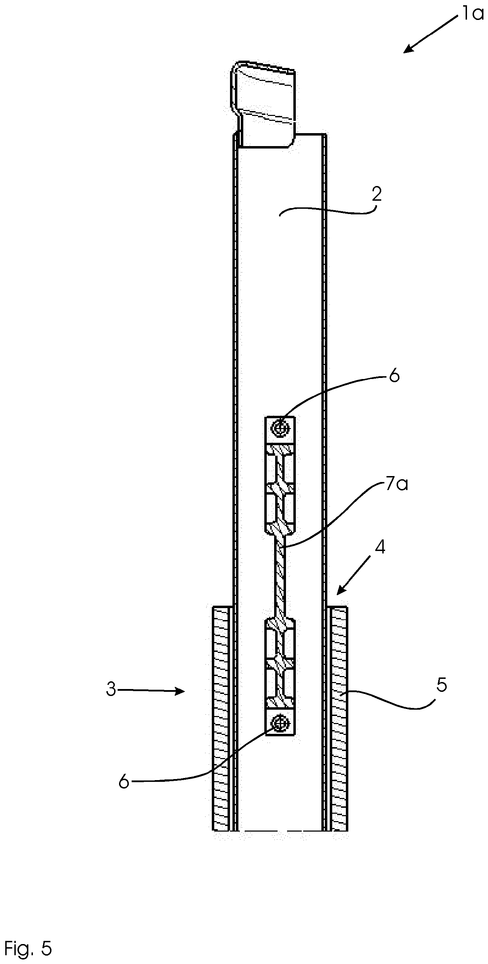

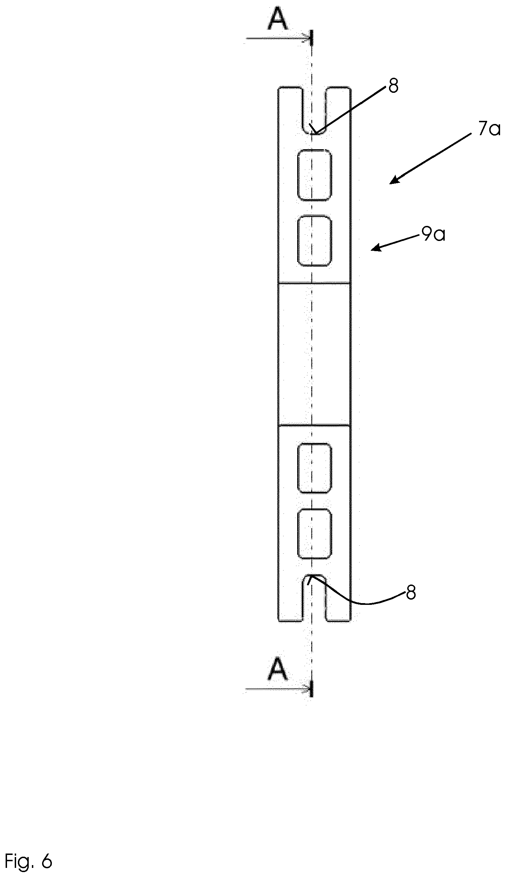

Ein zweites Ausführungsbeispiel eines Überrollschutzsystems 1a ist in den Figuren 4 bis 6 dargestellt. Das Überrollschutzsystem 1a unterscheidet sich von dem in den Figuren 1 bis 3 dargestellten Überrollschutzsystems 1 dadurch, dass das Verstärkungselement durch eine Kunststoffstrebe 7a gebildet ist. Die Kunststoffstrebe 7a weist neben einem flachen Abschnitt im Bereich der Biegekante 4, wenn der Überrollkörper 2 in der dargestellten Überschlagsposition angeordnet ist, im Bereich der Enden der Strebe 7a Stützkörper 9a auf, über die die Strebe 7a innerhalb des als Hohlprofil ausgebildeten Überrollkörpers 2 an den Innenflächen des Überrollkörpers 2 abgestützt ist.

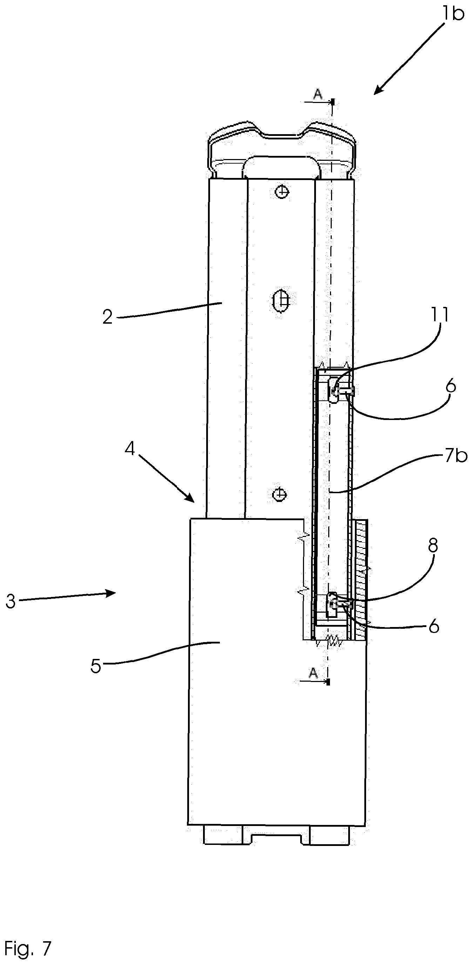

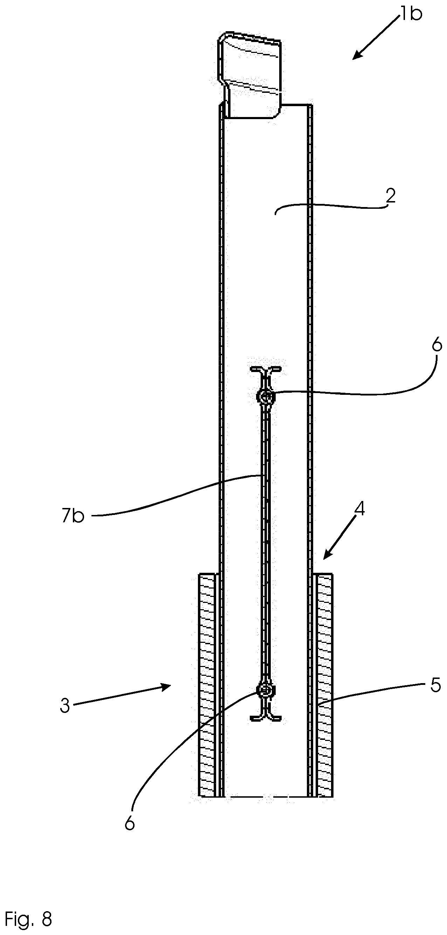

In dem in den Figuren 7 und 8 dargestellten weiteren Ausführungsbeispiel eines Überrollschutzsystems 1b ist eine weitere Ausführungsform einer Strebe 7b dargestellt, die aus zwei Stahlblechen gebildet ist, die mittels einer Verschweißung, bevorzugt einer Punktverschweißung miteinander verbunden sind.

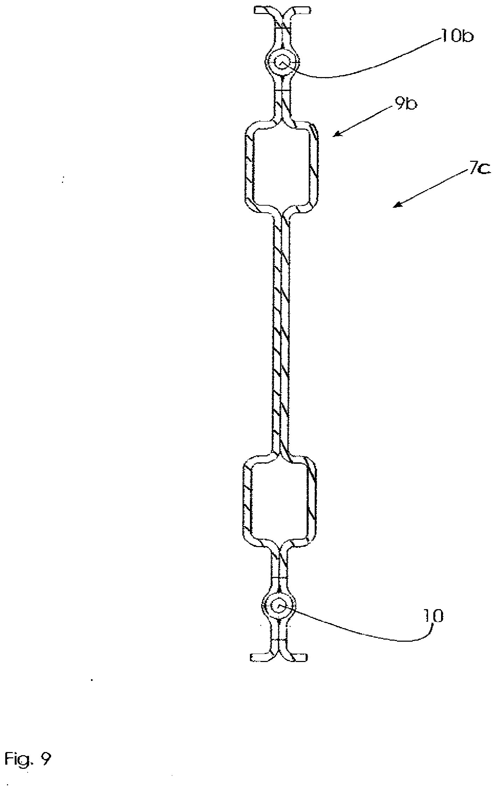

Eine dritte Ausführungsform einer Strebe 7c ist in Figur 9 dargestellt, wobei diese Strebe 7c analog zu der in Figur 8 dargestellten Strebe 7b durch zwei Stahlbleche gebildet ist. Darüber hinaus weist die Strebe 7c zwei im Abstand von der Biegekante 4 - bezogen auf die Überschlagsposition des Überrollkörpers 2 - angeordnete Stützkörper 9b auf, die durch Verprägungen der Stahlbleche gebildet sind. Über die als Stützkörper 9b wirkenden Verprägungen kann die Strebe 7c am Inneren des Hohlprofils abgestützt werden.

### Bezugszeichenliste

- 1, 1a, 1b: Überrollschutzsystem
- 2: Überrollkörper/Hohlprofil
- 3: Führungseinheit
- 4: Biegekante
- 5: Außenprofil
- 6: Niet
- 7, 7a, 7b, 7c: Verstärkungselement/Strebe
- 8: Schlitz
- 9a, 9b: Stützkörper
- 10, 10a, 10b: Öffnung
- 11: Nietschließkopf

## Patentansprüche

1. Überrollschutzsystem für Kraftfahrzeuge, mit
- einer an einem Kraftfahrzeug anordbaren Führungseinheit (3) und
- einem im Wesentlichen senkrecht zur Kraftfahrzeuglängsachse und Kraftfahrzeugquerachse zwischen einer Lagerungsposition und einer Überschlagsposition verstellbar an der Führungseinheit (3) gelagerten Überrollkörper (2),
**dadurch gekennzeichnet, dass**
an dem Überrollkörper (2) ein separates, ortsfest mit dem Überrollkörper (2) verbundenes Verstärkungselement (7, 7a, 7b, 7c) angeordnet ist, das sich in der Überschlagsposition des Überrollkörpers (2) in Ausfahrrichtung aus einem Bereich innerhalb der Führungseinheit (3) über eine Biegekante (4) hinaus in einen Bereich außerhalb der Führungseinheit (3) erstreckt, wobei das Verstärkungselement (7, 7a, 7b, 7c) als Strebe ausgebildet und die Strebe im Inneren des als Hohlprofil ausgebildeten Überrollkörpers (2) angeordnet ist, wobei die Strebe im Bereich der Biegekante (4) einen flachen Abschnitt aufweist.

2. Überrollschutzsystem nach Anspruch 1, **dadurch gekennzeichnet, dass** das Verstärkungselement (7, 7a, 7b, 7c) derart ausgebildet ist, dass die Biegesteifigkeit des Überrollkörpers (2) in Fahrzeugquerachsenrichtung erhöht und in Fahrzeuglängsachsenrichtung im Bereich der Biegekante (4) im Wesentlichen beibehalten wird.

3. Überrollschutzsystem nach Anspruch 1 oder 2, **dadurch gekennzeichnet, dass** das Verstärkungselement als flache Strebe (7, 7a, 7b, 7c) ausgebildet ist, deren Erstreckung in der Überschlagsposition des Überrollkörpers (2) in Fahrzeugquerachsenrichtung im Bereich der Biegekante (4) mehr als das 2-fache, bevorzugt mehr als das 4-fache, besonders bevorzugt mehr als das 8-fache, von deren Erstreckung in Fahrzeuglängsachsenrichtung beträgt.

4. Überrollschutzsystem nach einem der Ansprüche 3, **dadurch gekennzeichnet, dass** die Strebe (7, 7a, 7b, 7c) formschlüssig mit dem Überrollkörper (2) verbunden, insbesondere mit dem Überrollkörper (2) vernietet ist.

5. Überrollschutzsystem nach einem der Ansprüche 3 oder 4, **dadurch gekennzeichnet, dass** die Strebe (7a, 7b, 7c) einen, bevorzugt zwei sich in Fahrzeuglängsachsenrichtung erstreckende, an dem Überrollkörper (2) anliegende Stützkörper (9, 9a) aufweist, die in der Überschlagsposition des Überrollkörpers (2) im Abstand von der Biegekante (4) angeordnet ist.

6. Überrollschutzsystem nach Anspruch 5, **dadurch gekennzeichnet, dass** die Stützkörper durch Verprägungen (9) einer metallischen Strebe (7c) gebildet sind.

## Claims

1. Rollover protection system for motor vehicles, having
- a guide unit (3) which can be arranged on a motor vehicle, and
- a rollover body (2) which is mounted on the guide unit (3) to be movable substantially perpendicularly to the motor vehicle longitudinal axis and motor vehicle transverse axis between a storage position and a rollover position,
**characterised in that**
there is arranged on the rollover body (2) a separate reinforcing element (7, 7a, 7b, 7c) which is fixedly connected to the rollover body (2) and which, in the rollover position of the rollover body (2), extends in a deployment direction from a region inside the guide unit (3) beyond a bending edge (4) into a region outside the guide unit (3), wherein the reinforcing element (7, 7a, 7b, 7c) is in the form of a bar and the bar is arranged in the interior of the rollover body (2), the rollover body being in the form of a hollow profile, wherein the bar has a flat portion in the region of the bending edge (4).

2. Rollover protection system according to claim 1, **characterised in that** the reinforcing element (7, 7a, 7b, 7c) is in such a form that the bending stiffness of the rollover body (2) increases in the direction of the vehicle transverse axis and is substantially maintained in the direction of the vehicle longitudinal axis in the region of the bending edge (4).

3. Rollover protection system according to claim 1 or 2, **characterised in that** the reinforcing element is in the form of a flat bar (7, 7a, 7b, 7c) the extent of which in the rollover position of the rollover body (2) in the direction of the vehicle transverse axis in the region of the bending edge (4) is more than 2 times, preferably more than 4 times, particularly preferably more than 8 times, the extent thereof in the direction of the vehicle longitudinal axis.

4. Rollover protection system according to any one of claims 3, **characterised in that** the bar (7, 7a, 7b, 7c) is connected to the rollover body (2) by interlocking engagement, in particular is riveted to the rollover body (2).

5. Rollover protection system according to either claim 3 or claim 4, **characterised in that** the bar (7a, 7b, 7c) has one, preferably two, supporting structure(s) extending in the direction of the vehicle longitudinal axis and in contact with the rollover body (2), which supporting structure(s) is/are arranged at a distance from the bending edge (4) in the rollover position of the rollover body (2).

6. Rollover protection system according to claim 5, **characterised in that** the supporting structures are formed by corrugations (9) in a metal bar (7c).

## Revendications

1. Système de protection contre le retournement pour des véhicules automobiles, avec
- une unité de guidage (3) pouvant être agencée sur un véhicule automobile et
- un corps de retournement (2) monté sur l'unité de guidage (3) de manière réglable globalement perpendiculairement à l'axe longitudinal de véhicule automobile et à l'axe transversal de véhicule automobile entre une position de logement et une position de basculement,
**caractérisé en ce**
**qu'**un élément de renfort (7, 7a, 7b, 7c) séparé, relié de manière fixe au corps de retournement (2) est agencé au niveau du corps de retournement (2) et s'étend, dans la position de basculement du corps de retournement (2), dans la direction de sortie, hors d'une zone à l'intérieur de l'unité de guidage (3) via une arête de flexion (4), jusque dans une zone à l'extérieur de l'unité de guidage (3),
dans lequel l'élément de renfort (7, 7a, 7b, 7c) est réalisé comme une entretoise et l'entretoise est agencée à l'intérieur du corps de retournement (2) réalisé comme un profilé creux, l'entretoise comportant une partie plate dans la zone de l'arête de flexion (4).

2. Système de protection contre le retournement selon la revendication 1, **caractérisé en ce que** l'élément de renfort (7, 7a, 7b, 7c) est réalisé de telle sorte que la résistance à la flexion du corps de retournement (2) est accrue dans la direction d'axe transversal de véhicule et est globalement conservée dans la direction d'axe longitudinal de véhicule dans la zone de l'arête de flexion (4).

3. Système de protection contre le retournement selon la revendication 1 ou 2, **caractérisé en ce que** l'élément de renfort est réalisé comme une entretoise plate (7, 7a, 7b, 7c) dont l'extension dans la position de basculement du corps de retournement (2) dans la direction d'axe transversal de véhicule dans la zone de l'arête de flexion (4) est plus de 2 fois, de préférence plus de 4 fois, de manière encore davantage préférée plus de 8 fois, son extension dans la direction d'axe longitudinal de véhicule.

4. Système de protection contre le retournement selon l'une des revendications 3, **caractérisé en ce que** l'entretoise (7, 7a, 7b, 7c) est assemblée par concordance de forme au corps de retournement (2), notamment est rivetée avec le corps de retournement (2).

5. Système de protection contre le retournement selon l'une quelconque des revendications 3 ou 4, **caractérisé en ce que** l'entretoise (7a, 7b, 7c) comporte un, de préférence deux, corps de soutien (9, 9a) qui s'étendent dans la direction d'axe longitudinal de véhicule, appuyés au corps de retournement (2), qui sont agencés, dans la position de basculement du corps de retournement (2), à distance de l'arête de flexion (4).

6. Système de protection contre le retournement selon la revendication 5, **caractérisé en ce que** les corps de soutien sont formés par des déformations (9) d'une entretoise métallique (7c).
